# EUROPÄISCHE PATENTANMELDUNG

(11) **EP 4 663 365 A1**
(43) Veröffentlichungstag der Anmeldung: **17.12.2025**
(21) Anmeldenummer: 24182084.4
(22) Anmeldetag: 13.06.2024
(51) Int. Cl.: B28B 3/00, B28B 3/02, E01B 19/00, E01C 9/00, E01F 8/00, B28B 1/00, C04B 40/00, C04B 111/52, C04B 38/00

(54) **SCHALLABSORBER**

(71) Anmelder: Leube Betonteile GmbH & Co KG, 5751 Maishofen (AT)
(72) Erfinder: LANER, Hans, 5733 Bramberg (AT)
(74) Vertreter: Patentanwälte Barger, Piso & Partner

(57) **Zusammenfassung**

Die Erfindung betrifft ein Verfahren zur Herstellung eines Schallabsorbers, umfassend die Schritte
i. des Einbringens eines Porenbetons (1) in eine Form (2), wobei
ii. der Porenbeton (1) unter gleichzeitigem Rütteln verpresst wird, und
iii. der Schallabsorber ausgehärtet wird. Weiters betrifft die Erfindung einen Schallabsorber, der nach diesem Verfahren hergestellt wurde und ein Verlegeschema für diesen Schallabsorber.

## Beschreibung

Die Erfindung betrifft ein Verfahren zur Herstellung eines Schallabsorbers entsprechend dem Oberbegriff des Anspruches 1. Weiters betrifft die Erfindung einen durch dieses Verfahren hergestellten Schallabsorber und die Verwendung dieses Schallabsorbers zwischen und/oder seitlich von Schienen.

Schallabsorber sind Elemente, die beispielsweise zwischen oder an den Außenseiten von Bahngleisen (nur bei fester Fahrbahn) angebracht werden, um den Lärm, etwa des Schienenverkehrs zu reduzieren und eine Begeh- oder Befahrbarkeit der Gleise in Fahrtrichtung ohne Gleisgeräte zu ermöglichen. Sie werden daher häufig aus Porenbeton hergestellt und auch als Gleisabsorber bezeichnet. Obwohl Gleisabsorber strenggenommen nur die Schallabsorber zwischen den Bahngleisen umfasst, werden die Begriffe im Schienenverkehr häufig synonym verwendet. Eine alternative Variante zur Herstellung von Schallabsorbern ist die Einmischung von Additiven, etwa Holzspänen, in eine klassische Betonmischung. Es handelt sich dabei jedoch um eine andere Technik, die keinen Porenbeton betrifft.

Die poröse Struktur des Schall- bzw. Gleisabsorbers aus Porenbeton absorbiert Schallwellen und bietet so eine effektive und nachhaltige Lösung zur Lärmminderung im Schienenverkehr. Dies führt zu einer deutlichen Reduzierung des Lärmpegels, insbesondere im Bereich der hohen Frequenzen, die als besonders störend empfunden werden. Sie können sowohl bei Neu- als auch bei Sanierungsarbeiten eingesetzt werden, sind witterungsbeständig und haben eine lange Lebensdauer. Schall- bzw. Gleisabsorber sind in verschiedenen Farben und Formen erhältlich und können somit in die Gestaltung der Umgebung eingepasst werden. Die poröse Struktur des Porenbetons entsteht dabei üblicherweise durch Wasserstoffbläschen, die sich bei der Reaktion von Aluminiumpulver mit der alkalischen Mörtelsuspension bilden, welche die allmählich aushärtende Mischung aufschäumen. Eine weitere Möglichkeit ist die Verwendung von haufwerksporigem Beton, bei dem Gesteinskörner dazu führen, dass sich zwischen den Gesteinskörnern Hohlräume ausbilden. Haufwerksporiger Beton wird seltener für Schallabsorber verwendet, da er in der Regel eine dichtere Struktur hat und daher nicht die gleiche Effizienz bei der Schallabsorption wie Porenbeton bietet.

Die AT407062 beschreibt eine Lärmschutzeinrichtung für Gleisanlagen mit Schwellen, die trogförmige Vertiefungen aufweisen. Die Einrichtung besteht aus üblichen Schallabsorbern, wobei Gleisabsorber in die Vertiefungen eingesetzt werden und Randabsorbern zwischen die Schwellen und die Schienen gelegt werden. Die Randabsorber erstrecken sich vom Schwellenende bis in den Trogbereich und tragen die Gleisabsorber. Dadurch wird der Montageaufwand reduziert und die Lärmschutzeigenschaften der Lärmschutzeinrichtung werden verbessert.

Die WO2013075159 offenbart verschiedene Geometrien, Absorbermaterialien, Befestigung, Radiusausbildung und Möglichkeiten der Verbindung eines Gleisabsorbers mit der Schiene.

Auch wenn gute Ergebnisse mit diesen klassischen Schallabsorbern erzielt werden können, besteht Bedarf an einer Weiterentwicklung von Schallabsorbern, die noch bessere schallabsorbierende Eigenschaften und zugleich eine bessere Haltbarkeit erzielen können.

Erfindungsgemäß geschieht dies durch einen Schallabsorber, der nach dem Verfahren des Anspruchs 1 hergestellt wurde, mit anderen Worten wird ein Schallabsorber hergestellt, indem haufwerksporiger Beton in eine Form eingebracht wird, dieser haufwerksporige Beton anschließend unter gleichzeitigem Rütteln der Form verpresst wird, anschließend der gesamte Schallabsorber in seiner Form gerüttelt wird und schließlich der Schallabsorber aushärten gelassen wird.

Da Schallabsorber aus Porenbeton oder haufwerksporigem Beton hergestellt werden, wird eine Porengröße gewünscht, die auf die Bauteildicke abgestimmt werden muss. Das gegenständliche Verfahren verwendet statt klassischem Porenbeton haufwerksporigen Beton. Um die Porengröße derart fein einstellen zu können, muss das Gesteinsmaterial und seine Korngrößen auf den Anwendungszweck abgestimmt werden. Die Eigenschaften des Schallabsorbers lassen sich damit nur in einem begrenzten Umfang beeinflussen um eine möglichst optimale Dissipation und Absorption der Schallwellen zu erreichen.

Bei unterschiedlichen Vergleichsversuchen von Fertigungsverfahren wurde nun überraschend festgestellt, dass Schallabsorber, bei denen der haufwerksporige Beton unter gleichzeitigem Rütteln verpresst wird, besonders vorteilhafte schallabsorbierende Eigenschaften aufweist. Es ist für die Erfinder nicht völlig klar wie diese Eigenschaften zustande kommen, denkbar wären etwa veränderte Porengeometrien durch den Pressvorgang, die sich in besseren schalldämmenden und schallabsorbierenden Eigenschaften widerspiegeln. Dies erscheint plausibel, da sich das Porengefüge durch das Verpressen besser steuern lies, als durch die Betonrezeptur alleine. Die schalldämmenden und schallabsorbierenden Eigenschaften waren jedenfalls signifikant besser. Auch wenn nach dem erfindungsgemäßen Verfahren hergestellte Schallabsorber haufwerksporigen Beton und keinen klassischen Porenbeton (bei Gas die Porenstruktur bildet) aufweisen, so wird dennoch im Weiteren zur besseren Lesbarkeit der Anmeldung allgemein von "Porenbeton" gesprochen. Der Begriff "Porenbeton" ist daher im Zusammenhang der weiteren Beschreibung als Synonym mit haufwerksporigem Beton anzusehen.

Das Herstellungsverfahren wird nun anhand der Figuren näher erläutert. Dabei zeigt
Fig. 1 das Einbringen von Porenbetons in eine Form,
Fig. 2 das Verpressen des Porenbetons,
Fig. 3 das Anbringen von Bewehrungen in der Form,
Fig. 4 das Auftragen von Tagbetons auf den Porenbeton,
Fig. 5 ein Schnittbild durch das fertige Bauteil in der Form.

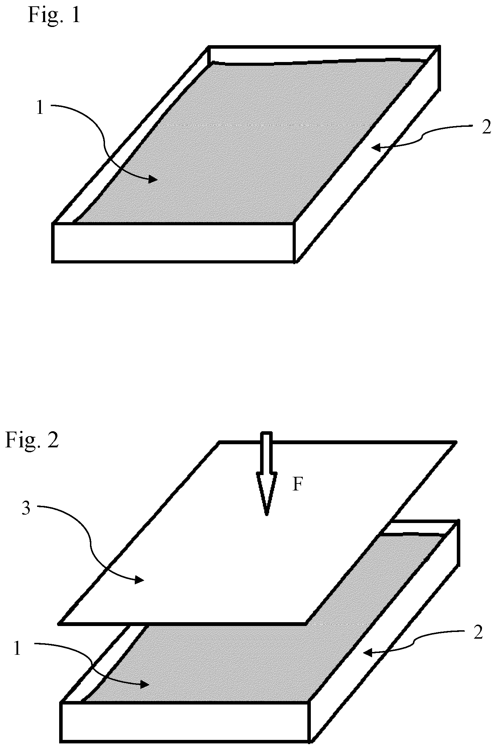

Im ersten Schritt des Herstellungsverfahrens wird, wie für die Herstellung von Schallabsorbern üblich und in Fig. 1 gezeigt, Porenbeton 1 in eine Form 2 eingebracht. Die Einbringung sollte recht gleichmäßig erfolgen und lässt sich aufgrund des höheren Materialdurchsatzes üblicherweise am besten mit Hilfe eines Förderbands (nicht dargestellt) durchführen.

Im zweiten Schritt wird der Porenbeton 1 üblicherweise möglichst gleichmäßig in der Form 2 verteilt, um homogene Eigenschaften bei der Schalldissipation zu erreichen. Dies geschieht üblicherweise durch Abziehen. Theoretisch ist es jedoch auch möglich durch gezielte Steuerung von Inhomogenität die Dissipationseigenschaften der Schallabsorber zu steuern.

Im dritten Schritt wird der Porenbeton 1 in der Form 2 verpresst, wie in Fig. 2 dargestellt. Üblicherweise geschieht dies mit Hilfe einer Gewichtsplatte 3. Während des Verpressens wird die Form 2 mit dem enthaltenen Porenbeton 1 und unter Druck durch die Gewichtsplatte 3 gerüttelt. Es wurden Gewichtsplatten 3 mit unterschiedlichem Anpressdruck F (dargestellt durch den Pfeil in Fig. 2) getestet, dabei hat sich gezeigt, dass das Verpressen mit einem Druck von zumindest 1500 kg/m², bevorzugt mit einem Druck von zumindest 1700 kg/m² erfolgen sollte. Dieser Schritt ist wesentlich für die späteren akustischen Eigenschaften. Dabei wird der Begriff "Gewichtsplatte" synonym mit allen Pressvorrichtungen verwendet, die ähnliche physikalische Eigenschaften aufweisen, insbesondere hydraulische und mechanische Pressen.

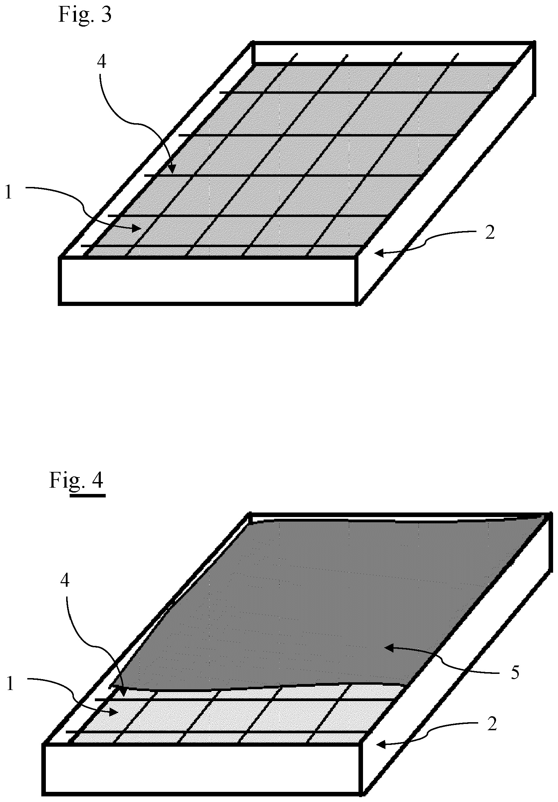

In einem vierten Schritt können, wie in Fig. 3 zu sehen ist, Bewehrungen 4, etwa in der Form von Querstreben, in der Gussform 2 eingebaut werden. Diese Bewehrungen 4 bestehen üblicherweise aus Bewehrungsstahl bzw. Betonstahlmatten und sind der Fachperson bekannt. Sie sind besonders vorteilhaft wenn das Bauteil (der Schallabsorber) später befahren wird (etwa an Bahnübergängen).

Im fünften Schritt kann ein Ausgleichs- bzw. Tragbeton 5 auf den Porenbeton 1 aufgebracht werden. Dies ist schemenhaft in Fig. 4 dargestellt, wobei zur besseren Verdeutlichung in der Fig. 4 ein Zeitpunkt während des Aufbringens des Tragbetons 5 dargestellt ist, der Tragbeton 5 also noch nicht alle Bewehrungen 4 bedeckt. Wurden im vierten Schritt Bewehrungen 4 angebracht, so wird der Tragbeton 5 auf der Seite des Porenbetons 1 in die Form 2 eingebracht, auf der sich die Bewehrungen 4 befinden, und sichergestellt, dass der Tragbeton 5 die Bewehrungen 4 einschließt. Das Aufbringen des Ausgleichs- bzw. Tragbeton 5 auf den Porenbeton 1 muss Nass in Nass (also in nassem Zustand des Porenbetons) erfolgen. Üblicherweise bedeutet das, dass sich ein Aufbringen des Trägerbetons 5 binnen 30 Minuten nach Einbringen des Porenbetons 1 als vorteilhaft erwiesen hat.

Wurde in Schritt Fünf Tragbeton 5 auf den Porenbeton 1 aufgebracht, so wird in einem sechsten Schritt der Ausgleichs- bzw. Tragbeton 5 üblicherweise gleichmäßig in der Form 2 verteilt. Dies geschieht wieder um eine möglichst gleichmäßige Materialverteilung sicher zu stellen.

Wurde in Schritt Fünf Tragbeton 5 auf den Porenbeton 1 aufgebracht, so muss in Schritt sieben das gesamte Bauteil samt Form 2 gerüttelt werden. Auf diese Weise wird vor allem sichergestellt, dass es zu einer guten Verbindung von Porenbeton 1 und Tragbeton 5 kommt.

Wurde in Schritt Fünf Tragbeton 5 auf den Porenbeton 1 aufgebracht, so wird in einem achten Schritt der Tragbeton 5 üblicherweise abgezogen. Auf diese Weise erhält das Bauteil eine gleichmäßige Oberfläche, was sowohl für Weiterverarbeitung als auch Transport vorteilhaft ist und eine zusätzliche Steuerung der Bauteildicke ermöglicht.

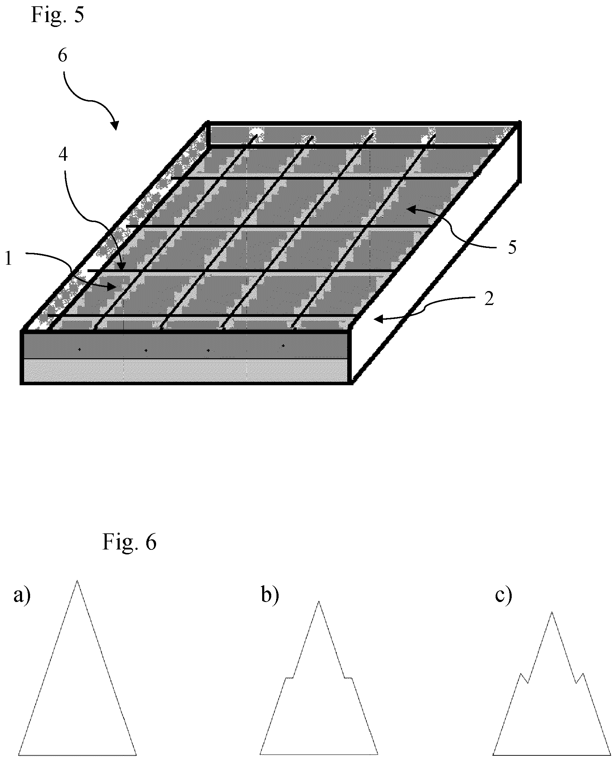

Im neunten Schritt wird das fertige Betonbauteil 6 (der Schallabsorber) aushärten gelassen. Üblicherweise geschieht das in einer Reifekammer, da auf diese Weise die Parameter der Aushärtung möglichst ideal reguliert werden können. Fig. 5 zeigt beispielhaft ein fertiges Bauteil 6 vor dem Aushärten in einer Schnittansicht. Dabei wurde der Tragbeton 5 schematisch als transparent dargestellt, um die eingeschlossenen Bewehrungen 4 und den darunterliegenden Porenbeton 1 sehen zu können. Bei einem realen Bauteil ist der Tragbeton 5 selbstverständlich deckend, wie auch im oberen Bereich der Fig. 4 angedeutet.

Wie oben auch beschrieben sind die Schritte 2, 4, 5, 6, 7 und 8 grundsätzlich optional. Sollte einer dieser optionalen Schritte durchgeführt werden, so bedeutet das auch nicht zwangsweise, dass alle Schritte durchgeführt werden müssen, eine Ausnahme stellt Schritt Sieben dar, der bei Durchführung von Schritt Fünf erforderlich ist. So wäre beispielsweise ein Verfahren möglich, dass nur die Schritte 1, 3, 5, 7 und 9, oder 1, 2, 3, 5, 7 und 9, oder 1, 3, 4, 5, 7 und 9, oder 1, 3, 5, 6, 7 und 9, oder 1, 3, 5, 7, 8 und 9, oder 1, 2, 3, 5, 6, 7 und 9, usw. umfasst. Die Ausführung aller Schritte 1-9 stellt jedoch ein besonders bevorzugtes Verfahren zur Herstellung eines Schallabsorbers dar.

Darüber hinaus sind selbstverständlich übliche Behandlungen von Betonbauteilen, wie etwa das Einfärben möglich. Weiters kann das Bauteil mit oder ohne konusförmiger Lochstruktur ausgeführt werden. Eine Anpassung der Form, Ausbildung und Anordnung der Konen ist möglich und kann projektbezogen festgelegt werden.

Konische Lochstrukturen, auch bekannt als konische Perforationen, können die Schallabsorptionsleistung von Schallabsorbern in mehrfacher Hinsicht verbessern. Ein Schallabsorber, der diese konischen Lochstrukturen aufweist stellt daher eine besonders bevorzugte Ausführungsform dar. Um diesen herzustellen weist die Form 2 konische Elemente auf. In Fig. 1 wären diese vom Porenbeton 1 umschlossen. Diese konischen Strukturen können unterschiedliche Formen und Längen haben und können entweder fester Bestandteil der Form 2 sein, oder separate Elemente darstellen, die in die Form gestellt werden können. Üblicherweise erstrecken sich die konischen Strukturen nur zu einem Teil in die Porenbetonschicht 1. Es ist jedoch auch möglich Schallabsorber 6 zu produzieren, bei denen die konischen Strukturen so ausgebildet sind, dass sie sowohl die Porenbetonschicht 1, als auch die optionale Trägerbetonschicht 5 durchdringen. Diese Ausgestaltung kann vorteilhaft sein wenn Gleisabsorber produziert werden sollen, bei denen die bereits guten Versickerungseigenschaften von Regenwasser verbessert werden sollen. Fig. 6 zeigt beispielhafte, nicht abschließende, Darstellungen möglicher Querschnitte von zur Verwendung im erfindungsgemäßen Verfahren geeigneter konischen Strukturen.

Die konischen Strukturen bewirken verschiedene akustische Effekte, die zur Absorption von Schallwellen beitragen, insbesondere im mittleren und hohen Frequenzbereich. So können konische Löcher das Absorptionsspektrum eines akustischen Absorbers verbreitern. Die konische Form bewirkt eine Variation des Lochdurchmessers, wodurch der Frequenzbereich, in dem der Absorber Schall effektiv absorbieren kann, erweitert wird. Weiters bewirkt die konische Form eine Verbesserung der diffusen Streuung, d. h. die Wellen werden im Absorbermaterial in verschiedene Richtungen reflektiert und umgelenkt. Diese Streuung unterbricht die kohärente Ausbreitung der Schallwellen und führt zu einer erhöhten Energieabsorption. Konische Löcher können darüber hinaus dazu beitragen, die Impedanz des Absorbermaterials an die Impedanz der Luft anzupassen, was für eine effiziente Schallabsorption entscheidend ist. Die konische Form schafft einen allmählichen Übergang im Lochdurchmesser, wodurch Impedanzfehlanpassungen minimiert und die Absorption maximiert werden. Allgemein können konische Lochstrukturen die Schallabsorptionsleistung von akustischen Absorbern erheblich verbessern, insbesondere im mittleren und hohen Frequenzbereich. Ihre Fähigkeit, das Absorptionsspektrum zu erweitern, die diffuse Streuung zu verstärken, die Impedanzanpassung zu verbessern, die Oberflächenreflexion zu verringern und die Luftströmung zu steuern, macht sie zu wertvollen Designelementen.

Grundsätzlich lassen sich unterschiedlichste Arten von Porenbeton 1 und Trägerbeton 5 für die Herstellung eines Schallabsorbers gemäß dem erfindungsgemäßen Verfahren verwenden. In bevorzugten Ausführungsformen weist die Tragbetonschicht 5 eine um etwa 30% höhere Dichte als die Porenbetonschicht 1 auf.

Besonders gute Ergebnisse wurden mit Porenbeton 1 erzielt, der eine Dichte von etwa 1850 kg/m³ aufweist und/oder mit Trägerbeton 5, der eine Dichte von etwa 2400 kg/m³ aufweist. Dies ergibt sowohl gute akustische, als auch Festigkeitseigenschaften.

Weiters hat es sich als vorteilhaft herausgestellt, wenn das Verhältnis der Dicke der Tragbetonschicht 5 zur Porenbetonschicht 1 zumindest 1:1 beträgt, besonders bevorzugt ist die Porenbetonschicht 1 dicker als die Trägerbetonschicht 5. Auch hier ergaben Versuche sowohl gute akustische, als auch Festigkeitseigenschaften.

Nach dem erfindungsgemäßen Verfahren hergestellte Schallabsorber lassen sich problemlos in unterschiedlichen Größen produzieren. Übliche Breiten und Längen reichen von wenigen Zentimetern bis zu einigen Metern. Übliche Dicken reichen von wenigen Zentimetern bis etwa 40cm. Grundsätzlich ist es auch möglich besonders kleine oder große Schallabsorber herzustellen, diese verursachen jedoch bei Einbau und Austauschbarkeit Probleme und stellen daher häufig sowohl die Produktionsfirmen, als auch die Transportdienstleister, die die fertigen Schallabsorber transportieren müssen, vor große Herausforderungen, weshalb üblicherweise von zu dicken, zu dünnen und zu großen Platten Abstand genommen wird.

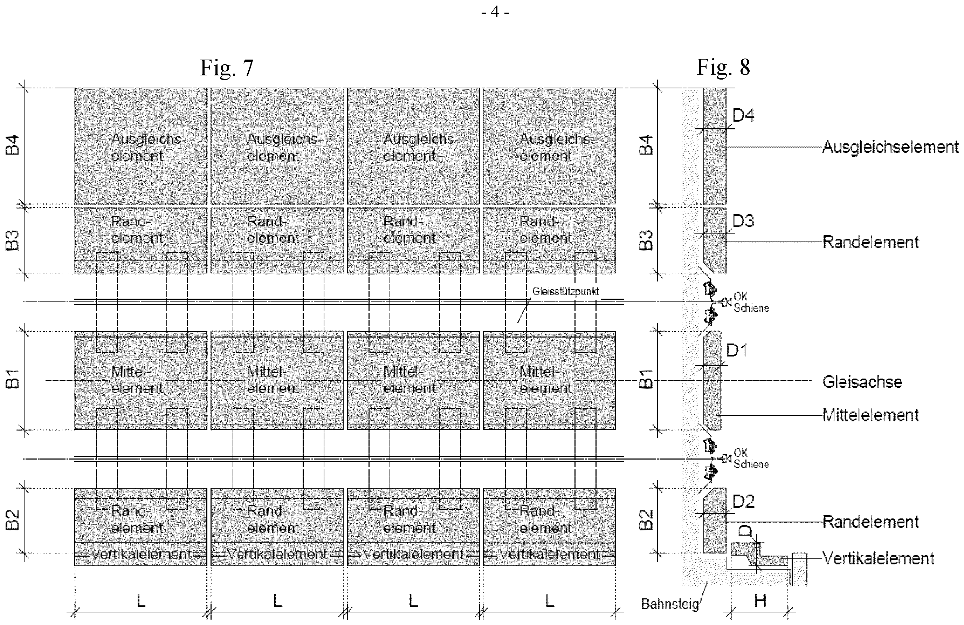

Die fertigen Schallabsorber können beispielsweise als Gleisabsorber verwendet werden. Dabei werden die Schallabsorber in einem bestimmten Verlegeschema im Gleisbett von Schienenfahrzeugen verlegt, um eine möglichst effiziente Schallabsorption vor Ort sicher zu stellen. Ein Verlegeschema, das sich für die erfindungsgemäßen Schallabsorber bewährt hat ist in Fig. 7 und Fig. 8 dargestellt. Dabei zeigt

Fig. 7 ein Verlegeschema von verlegten Gleisabsorbern aus der Vogelperspektive,

Fig. 8 ein Verlegeschema von verlegten Gleisabsorbern aus der Seitenansicht.

Die Fig. 7 zeigt ein Verlegeschema von verlegten Gleisabsorbern aus der Vogelperspektive, das eine besonders gute Schallabsorbtion erreicht. Dabei sind B1, B2, B3 und B4 die Breiten der Mittel-, Rand- und Ausgleichselemente. Die Breiten können jeweils zwischen 150 mm und 1500 mm liegen. L bezeichnet die Länge der Elemente, die zwischen 300 mm und 2000 mm liegen können. Üblicherweise weisen Mittel-, Rand-, Vertikal- und Ausgleichselemente die gleichen Längen auf.

Die Fig. 8 zeigt ein Verlegeschema von verlegten Gleisabsorbern aus der Seitenansicht, das eine besonders gute Schallabsorbtion erreicht. Dabei sind B1, B2, B3 und B4 die Breiten der Mittel-, Rand- und Ausgleichselemente. Die Breiten können jeweils zwischen 150 mm und 1500 mm liegen. H ist die Höhe des Vertikalelements und liegt üblicherweise zwischen 150 mm und 1500 mm. D1, D2, D3 und D4 bezeichnet die Dicken der Mittel-, Rand- und Ausgleichselemente. Die Dicken können jeweils zwischen 100 mm und 400 mm liegen, wobei das Mittelelement häufig dünner ausgeführt ist. D bezeichnet die Dicke des Vertikalelements und liegt üblicherweise zwischen 80 mm und 400 mm.

Für die Verlegeschemen der Fig. 7 und Fig. 8 ist zu beachten, dass diese je nach Anwendungsfall auch nur teilweise ausgeführt werden können, also beispielsweise auf Vertikalelemente, Ausgleichselemente und/oder Randelemente verzichtet werden kann.

Zusammenfassend lässt sich sagen, dass die Erfindung ein Verfahren zur Herstellung eines Schallabsorbers betrifft, das zumindest die folgenden Schritte umfasst:
i. des Einbringens eines Porenbetons 1 in eine Form 2, wobei
ii. der Porenbeton 1 unter gleichzeitigem Rütteln verpresst wird,
iii. der Schallabsorber ausgehärtet wird.

In einem besonders vorteilhaften Verfahren wird, nachdem der Porenbeton 1 unter gleichzeitigem Rütteln verpresst wurde (Pkt. ii), im noch nassen Zustand auf den Porenbeton 1 eine Schicht Trägerbeton 5 aufgebracht wurde, der gesamte Schallabsorber gerüttelt. Dieses besonders bevorzugte Verfahren umfasst damit die Schritte:
i. des Einbringens eines Porenbetons 1 in eine Form 2, wobei
ii. der Porenbeton 1 unter gleichzeitigem Rütteln verpresst wird,
iii. im noch nassen Zustand auf den Porenbeton 1 eine Schicht Trägerbeton 5 aufgebracht wird,
iv. der gesamte Schallabsorber gerüttelt wird,
v. der Schallabsorber ausgehärtet wird.

In einer weiteren besonders vorteilhaften Ausgestaltung des erfindungsgemäßen Verfahrens weist die Form 2 konische Strukturen auf, die sich in das Innere der Form 2 erstrecken. Im Zuge der Herstellung nehmen diese konischen Strukturen zumindest einen Teil des Raums ein, der ohne die konischen Strukturen vom Porenbeton 1 aufgefüllt würde. In einer weiteren bevorzugten Ausgestaltung des erfindungsgemäßen Verfahrens wird in die Tragbetonschicht 5 eine Bewehrung 4 eingebracht. Dieses besonders bevorzugte Verfahren umfasst damit die Schritte:
i. des Einbringens eines Porenbetons 1 in eine Form 2, wobei
ii. der Porenbeton 1 unter gleichzeitigem Rütteln verpresst wird,
iii. in die Tragbetonschicht 5 eine Bewehrung 4 eingebracht wird,
iv. im noch nassen Zustand auf den Porenbeton 1 eine Schicht Trägerbeton 5 aufgebracht wird der die Bewehrung 4 einschließt,
v. der gesamte Schallabsorber gerüttelt wird,
vi. der Schallabsorber ausgehärtet wird.

Weiters umfasst die Erfindung Schallabsorber die nach einem der erfindungsgemäßen Verfahren hergestellt wurden, wobei der Schallabsorber bevorzugt eine Tragbetonschicht 5 aufweist und die Oberfläche des Schallabsorbers bevorzugt eine konische Lochstruktur, zumindest in der Porenbetonschicht 1, und/oder eine Bewehrung 4 aufweist. Drüber hinaus umfasst die Erfindung ein Verlegeschema, bevorzugt nach den Fig. 7 und 8, das eine besonders gute Schallabsorbtion erreicht.

## Patentansprüche

1. Verfahren zur Herstellung eines Schallabsorbers, umfassend die Schritte
i. des Einbringens eines Porenbetons (1) in eine Form (2), **dadurch gekennzeichnet, dass**
ii. der Porenbeton (1) unter gleichzeitigem Rütteln verpresst wird,
iii. der Schallabsorber ausgehärtet wird.

2. Verfahren nach Ansprüche 1, **dadurch gekennzeichnet, dass** die Form (2) konische Strukturen aufweist, die sich in das Innere der Form (2) erstrecken.

3. Verfahren nach einem der Ansprüche 1 oder 2, **dadurch gekennzeichnet, dass** nachdem der Porenbeton (1) gem. Pkt. ii. des Anspruchs 1 unter gleichzeitigem Rütteln verpresst wurde, im noch nassen Zustand auf den Porenbeton (1) eine Schicht Trägerbeton (5) aufgebracht wird und anschließend der gesamte Schallabsorber gerüttelt wird.

4. Verfahren nach einem der Ansprüche 1 bis 3, **dadurch gekennzeichnet, dass** das Verpressen in Schritt ii) mit einem Druck von zumindest 1500 kg/m², bevorzugt mit einem Druck von zumindest 1700 kg/m² erfolgt.

5. Verfahren nach einem der Ansprüche 3 oder 4, **dadurch gekennzeichnet, dass** in die Tragbetonschicht (5) eine Bewehrung (4) eingebracht wird.

6. Verfahren nach einem der Ansprüche 1 bis 5, **dadurch gekennzeichnet, dass** zum Verpressen des Porenbetons (1) in Schritt ii. des Anspruchs 1 eine hydraulische Presse verwendet wird.

7. Verfahren nach einem der Ansprüche 3 bis 6, **dadurch gekennzeichnet, dass** das Aufbringen des Trägerbetons (5) auf den Porenbeton (1) in Anspruch 3 nach höchstens 30 Minuten erfolgt.

8. Verfahren nach einem der Ansprüche 1 bis 6, **dadurch gekennzeichnet, dass** der Schallabsorber in einer Reifekammer ausgehärtet wird.

9. Verfahren nach einem der Ansprüche 1 bis 7, **dadurch gekennzeichnet, dass** die Oberflächen des Schallabsorbers einer Oberflächenbehandlung unterzogen werden.

10. Schallabsorber, **dadurch gekennzeichnet, dass** er nach einem der der Verfahren der vorhergehenden Ansprüche hergestellt ist.

11. Schallabsorber nach Anspruch 9, **dadurch gekennzeichnet, dass** die Oberfläche des Schallabsorbers eine konische Lochstruktur zumindest in der Porenbetonschicht (1) aufweist.

12. Schallabsorber nach einem der Ansprüche 9 oder 10, **dadurch gekennzeichnet, dass** die Tragbetonschicht (5) eine um etwa 30% höhere Dichte als die Porenbetonschicht (1) aufweist.

13. Schallabsorber nach einem der Ansprüche 9 bis 11, **dadurch gekennzeichnet, dass** der Porenbeton (1) eine Dichte von etwa 1850 kg/m³ aufweist und/oder der Trägerbeton (5) eine Dichte von etwa 2400 kg/m³ aufweist.

14. Schallabsorber nach einem der Ansprüche 9 bis 12, **dadurch gekennzeichnet, dass** das Verhältnis der Dicke der Tragbetonschicht (5) zur Porenbetonschicht (1) zumindest 1:1 beträgt.

15. Verwendung von Schallabsorbern der Ansprüche 9 bis 13, **dadurch gekennzeichnet, dass** die Gleisabsorber zwischen und/oder seitlich von Schienen angeordnet sind.
